# EUROPÄISCHE PATENTSCHRIFT

(11) **EP 3 572 313 B1**
(45) Veröffentlichungstag und Bekanntmachung des Hinweises auf die Patenterteilung: **24.03.2021**
(21) Anmeldenummer: 18173868.3
(22) Anmeldetag: 23.05.2018
(51) Int. Cl.: B62K 25/30, B62K 19/20

(54) **FAHRRADRAHMEN UND FAHRRAD**
BICYCLE FRAME AND BICYCLE
CADRE DE BICYCLETTE ET BICYCLETTE

(43) Veröffentlichungstag der Anmeldung: 27.11.2019
(73) Patentinhaber: Ghost-Bikes GmbH, 95652 Waldsassen (DE)
(72) Erfinder: Ackermann, Volker, 95643 Tirschenreuth (DE); Kai, Christian, D-95652 Waldassen (DE)
(74) Vertreter: V.O.

(56) Entgegenhaltungen:
- EP-A2- 1 661 801
- WO-A1-99/15396
- US-B1- 8 430 417

## Beschreibung

Vorliegende Erfindung betrifft einen Fahrradrahmen, umfassend einen vorderen Rahmenteil und einen hinteren Rahmenteil, jeweils ausgelegt zur Aufnahme eines Vorder- bzw. Hinterrads, wobei der hintere Rahmenteil wenigstens eine Kettenstrebe umfasst, die ein hinteres Ausfallende, zur Aufnahme des Hinterrads, mit einem Tretlagergehäuse am vorderen Rahmenteil verbindet.

Darüber hinaus betrifft die vorliegende Erfindung ein Fahrrad mit einem solchen Fahrradrahmen.

Solchen Fahrräder bzw. Fahrradrahmen sind aus dem Stand der Technik bekannt. Vollgefederte Fahrrahmen sind beispielswiese durch die EP 1 661 801 A2 und die WO 99/15396 A1 bekannt. Im Gegensatz zu Starrahmen ist hier der Hinterbau verschwenkbar zum Vorderbau gelagert. Das Dokument EP 1 661 801 A2 offenbart einen Fahrradrahmen, umfassend einen vorderen Rahmenteil und einen hinteren Rahmenteil, jeweils ausgelegt zur Aufnahme eines Vorder- bzw. Hinterrades, wobei der hintere Rahmenteil wenigstens eine Kettenstrebe umfasst, die ein hinteres Ausfallende, zur Aufnahme des Hinterrades, mit einem Tretlagergehäuse am vorderen Rahmenteil verbindet, wobei die Kettenstrebe tretlagergehäuseseitig ein Hakenende mit wenigstens einem Hakenelement aufweist, das das Tretlagergehäuse in einem Umfassungsabschnitt umgreift.

Meist bestehen Fahrradrahmen aus einer Mehrzahl an Streben, die miteinander verbunden eine Skelettstruktur bilden, die der Aufnahme der für ein Fahrrad notwendigen Komponenten, also Räder, Sattel, Vorderradgabel, Lenker etc. dient. Neben der Anordnung solcher Hauptkomponenten werden Fahrräder meist jedoch mit weiteren Bauteilen wie Schaltungsmitteln, Bremsen, Kettungsführungen, Rammschutzeinrichtungen versehen. Vor allem Kettenführungen und Rammschutzeinrichtungen werden seit einiger Zeit als sogenannte ISCG (International Standard Chain Guide) angeboten. Ursprünglich wurde solch ein ISCG nur bei Mountainbikes verwendet, um die Montage einer Kettenführung insbesondere mittels einer Dreipunktbefestigung am Tretlagergehäuse zu ermöglichen, ohne dafür das Tretlager ein- oder ausbauen zu müssen. Zwischenzeitlich findet man solche ISCGs jedoch auch an anderen Fahrrädern, wobei mitunter nicht nur Kettenführungen und Rammschutz, sondern auch Halterungen für Kettenkästen, Getriebekurbeln etc. dort befestigt werden können.

Teil eines solchen ISCG ist ein Aufnahmemittel, mitunter auch als ISCG-Aufnahme bezeichnet, das vorzugsweise integral am Rahmen des Fahrrads vorgesehen ist. Hat ein Rahmen kein solches Aufnahmemittel, gibt es spezielle Adapter, die insbesondere am Tretlagergehäuse verschraubt oder dergleichen angeschlagen werden können. Üblicherweise weist ein solches ISCG drei Aufnahmen und insbesondere Aufnahmemittel auf, die in Abhängigkeit von der Ausführung des ISCG einen unterschiedlichen Lochkreisdurchmesser haben. Bekannt sind Lochkreisdurchmesser von 42,5 mm, 59,2 mm und, beim sog. ISCG 05 von 73 mm. Neben ISCGs mit drei Aufnahmen gibt es auch Ausführungen, bei denen nur zwei Aufnahmen vorgesehen sind, insbesondere, wenn kein Bashguard bzw. Kettenblatt-Rammschutz vorgesehen sein soll.

Neben dem Problem der Anordnung eines ISCG im Bereich des Tretlagergehäuses steht die Fahrradindustrie immer wieder vor dem Problem der automatisierten Schweißbarkeit eines Fahrradrahmens im Bereich des Tretlagergehäuses. Aufgrund der multiplen Anschlusspunkte unterschiedlicher Streben des Fahrradrahmens in diesem Bereich ist bisher eine Schweißbarkeit durch Schweißroboter nur bedingt gegeben und insbesondere dann problematisch, wenn ISCG Aufnahmen vorhanden sein sollen.

Aufgabe der vorliegenden Erfindung ist es folglich, einen Fahrradrahmen anzubieten, der eine verbesserte Raumaufteilung im Bereich des Tretlagergehäuses bietet, insbesondere, um eine automatisierte Schweißbarkeit zu erlauben wenn Zusatzbauteile wie ein ISCG verwendet werden sollen.

Diese Aufgabe wird durch einen Fahrradrahmen und ein Fahrrad gemäß den unabhängigen Ansprüchen gelöst.

Insbesondere wird diese Aufgabe gelöst durch einen Fahrradrahmen, umfassend einen vorderen Rahmenteil und einen hinteren Rahmenteil, jeweils ausgelegt zur Aufnahme eines Vorder- bzw. Hinterrades, gelöst, wobei der hintere Rahmenteil wenigstens eine Kettenstrebe umfasst, die ein hinteres Ausfallende, zur Aufnahme des Hinterrades, mit einem Tretlagergehäuse am vorderen Rahmenteil verbindet, wobei der Fahrradrahmen ein Starrrahmen ist, und wobei die Kettenstrebe tretlagergehäuseseitig ein Hakenende mit wenigstens einem Hakenelement aufweist, der das Tretlagergehäuse in einem Umfassungsabschnitt A umgreift, wobei das Hakenelement Teil eines ISCG ist und wenigstens ein Aufnahmemittel für eine Kettenführung und/oder einen Kettenblatt-Rammschutz aufweist, und wobei das Hakenelement stoffschlüssig mit dem Tretlagergehäuse verbunden ist.

Auch wird diese Aufgabe gelöst durch ein Fahrrad mit einem Fahrradrahmen wie er hier beschrieben ist, weiter umfassend ein ISCG.

Kern der Erfindung ist die Ausbildung wenigstens einer Kettenstrebe und vorzugsweise der kettenblattseitig angeordneten Kettenstrebe eines starren Fahrradrahmens mit einem Hakenende auf der tretlagergehäuseseitigen Seite, also der Seite, die am Tretlagergehäuse angeschlossen ist. Das Hakenende weist wenigstens ein Hakenelement auf, das in einem Umfassungsabschnitt einen Aufnahmebereich umschließt, in den das Tretlagergehäuse eingefügt werden kann bzw. an den das Tretlager stoffschlüssig angeschlossen ist. Im Umfassungsabschnitt umgreift das Hakenelement das Tretlagergehäuse, wobei sich der Umfassungsabschnitt optional über einen bestimmten Abschnitt um das Tretlagergehäuse herum erstreckt.

Der Fahrradrahmen ist als ein Starrrahmen bzw. Hardtail-Rahmen ausgebildet, das bedeutet, dass er keinen gefederten hinteren Rahmenteil aufweist. Der hintere Rahmenteil ist optional insbesondere in Bezug auf die Kettenstrebe fest am vorderen Rahmenteil angeordnet.

Optional ist das Hakenende als Gabel mit wenigstens zwei Gabelarmen ausgebildet, die das Hakenelement bilden.

Das Hakenelement ist Teil eines ISCG und weist wenigstens ein Aufnahmemittel für eine Kettenführung und/oder einen Kettenblatt-Rammschutz (Bashguard) auf. Die Aufnahmemittel können darüber hinaus auch zur Aufnahme anderer Bauteile, beispielsweise einer Getriebekurbel, eines Kettenkastens etc. vorgesehen sein. Dies ist vom Begriff Aufnahmemittel hier mitumfasst. Optional sind zwei, weiter optional drei Aufnahmemittel vorgesehen. Die Aufnahmemittel sind vorzugsweise Schraubenaufnahmen und insbesondere Aufnahmen für M6- Schrauben. Der Lochkreisdurchmesser der Aufnahmemittel, optional die Anordnung der unterschiedlichen Mittelachsen der jeweiligen Aufnahmemittel, entspricht optional den Lochkreisdurchmessern, wie sie aus dem Stand der Technik bekannt und eingangs bereits erwähnt wurden. Bei einem ISCG 05 wäre der Lochkreisdurchmesser der Aufnahmemittel hier vorzugsweise mit 73 mm festgelegt. Bei einer solchen Anordnung ergibt sich ein Anschlussbereich am Tretlagergehäuse, der eine stabile Krafteinleitung über die Kettenstrebe in das Tretlagergehäuse bei gleichzeitig sehr reduziertem Platzbedarf sicherstellt.

Optional weist das Hakenelement im Umfassungsabschnitt eine Innengeometrie auf, die komplementär zur Außengeometrie des Tretlagergehäuses ausgebildet ist. Optional folgt die Innengeometrie des Hakenelements im Umfassungsabschnitt der Außengeometrie des Tretlagergehäuses wenigstens in bestimmten Abschnitten, vorzugsweise in allen Abschnitten des Umfassungsabschnitts. "Komplementär" bedeutet optional, dass ein Aufstecken des Hakenelements auf das Tretlagergehäuse ohne weitende bzw. formreduzierende Maßnahmen und/oder Werkzeuge möglich ist. Optional kann das Hakenende einfach auf das Tretlagergehäuse insbesondere in Axialrichtung des Tretlagergehäuses aufgesteckt werden, wobei es vorzugsweise orthogonal dazu über Formschluss fixiert ist. In einem weiteren Schritt kann es dann insbesondere auch in vorher genannter Axialrichtung ortsfest befestigt werden. Optional bedeutet komplementär "spielbehaftet". Das Tretlagergehäuse und das Hakenende sind optional derart ausgebildet, dass sie "spielbehaftet" aufeinander austeckbar sind, wobei anschließend ein Fügeverfahren, wie es im Folgenden noch beschrieben ist, eine feste Verbindung herstellt.

Optional ist das Hakenelement mittels eines stoffschlüssigen Fügeverfahrens, beispielsweise mittels eines Lötverfahrens oder Schweißverfahrens, mit dem Tretlagergehäuse verbunden. Insbesondere in diesem Zusammenhang ist es denkbar, den Fahrradrahmen als Metallrahmen auszuführen. Es ist auch denkbar, den Fahrradrahmen im Bereich des Tretlagergehäuses aus einem Metallmaterial herzustellen.

Um das zuvor genannte Fügeverfahren zu erleichtern, weist das Hakenelement auf einem dem Tretlagergehäuse zugewandten Bereich wenigstens eine Kehle oder dergleichen Ausnehmung zur Aufnahme von Fügematerial auf. Es ist auch denkbar, dass diese Kehle nach dem Fügen wenigstens teilweise geschlossen und/oder verfüllt ist, sodass gilt, dass optional das Hakenelement vor dem Verbinden mit dem Tretlagergehäuse eine solche Kehle aufweist. Dies vereinfacht das Verfügen.

Vorzugsweise ist die Kehle wenigstens auf einer vom Fahrradrahmen wegweisenden Außenseite des Hakenendes angeordnet und/oder einer von außen zugänglichen Seite des Fahrradrahmens.

Optional weist das Tretlagergehäuse ein orthogonal zur Haupterstreckungsebene des Fahrrades bzw. quer zur Fahrradlängsachse, welche coplanar zur Fahrradlängsachse verläuft, verlaufendes Rohr oder einen der gleichen Volumenkörper mit wenigstens teilweise zylindrischer Form auf, zur insbesondere innenseitigen Aufnahme eines Tretlagers, wobei das Hakenelement das Rohr in dem Umfassungsabschnitt umgreift.

Optional schließt der Umfassungsabschnitt wenigstens 40 %, optional wenigstens 50 % und weiter optional wenigstens 55 % des Umfangs des Tretlagergehäuses ein und/oder maximal 80 %, optional maximal 70 % und weiter optional maximal 60 % des Umfangs des Tretlagergehäuses ein.

Optional sind im Umfassungsabschnitt die Außengeometrie des Tretlagergehäuses ringförmig und die Innengeometrie des Hakenelements dazu komplementär kreisbogenförmig ausgebildet. Insbesondere in diesem Zusammenhang ist optional ein Mittelpunktwinkel α der Innengeometrie des Hakenelementes von wenigstens 145°, optional wenigstens 180°, weiter optional wenigstens 200° und/oder von maximal 290°, optional maximal 250° und weiter optional maximal 215° festgelegt.

Insbesondere bei einer solchen Ausführung ist es vorstellbar, das Hakenelement so auszubilden, dass es ausschließlich in einer Richtung parallel zur Tretlagerachse, d. h. im Wesentlichen orthogonal zur Fahrradlängsachse bzw. orthogonal zur Haupterstreckungsebene des Fahrrades, auf das Tretlagergehäuse aufschiebbar ist. Auf diese Weise werden aus Geometriegründen über die Kettenstrebe eingeleitete Normalkräfte bereits sicher in das Tretlagergehäuse eingeleitet. Die aufgebrachte Fügeverbindung kann so kleiner ausgeführt werden.

Optional verläuft die Kettenstrebe in Richtung der Kettenblattseite des Tretlagergehäuses.

Optional ist wenigstens ein Teil des Hakenelements in einer Richtung radial zur Tretlagerachse A_{T} des Tretlagers betrachtet dicker als in einer Richtung parallel zu dieser Tretlagerachse. Weiter optional ist wenigstens ein Teil des Hakenelements in einer Richtung radial zur Tretlagerachse A_{T} und orthogonal zur Haupterstreckungsachse As der Kettenstrebe bzw. eines Kettenstrebenprofils betrachtet dicker als in einer Richtung parallel zu dieser Tretlagerachse. Optional ergibt sich insbesondere in diesem Zusammenhang ein Rechteckquerschnitt des Hakenelementes, mit einer größeren Höhe h als Breite b. Die Breite b verläuft hier optional in Richtung der Tretlagerachse A_{T}, die Höhe h orthogonal dazu. Auf diese Weise wird der Platzbedarf entlang der Tretlagerachse reduziert, die Steifigkeit des Bauteils jedoch gewährleistet.

Optional ist das Hakenende mit einem Anschlussprofil versehen, das stoffschlüssig mit einem Kettenstrebenprofil der Kettenstrebe verbunden ist. Optional ist diese Verbindung als Schweiß-, Löt- oder dergleichen Fügeverbindung ausgeführt. Auf diese Weise ist es möglich, das Hakenende unabhängig vom Kettenstrebenprofil herzustellen und die beiden Bauteile zur fertigen Kettenstrebe zu verbinden. Es ist denkbar, das Hakenende aus einem Vollprofil herzustellen und insbesondere gefräst oder dergleichen spanend bearbeitet herzustellen. Auch kann das Hakenende geschmiedet sein oder ein Gussteil sein.

Optional weist das Hakenende einen Gabelhals auf, an den das Hakenelement anschließt. Der Gabelhals und/oder das Hakenelement sind weiter optional in Bezug zur Längsachse As des Kettenstrebenprofils seitlich und insbesondere orthogonal in Richtung einer vom Hinterrad aufgespannten Hinterradebene versetzt am Kettenstrebenprofil angeordnet. Diese Hinterradebene wird unter anderem auch durch die Längsachse des Fahrrads und die Sitzstrebe bzw. das Oberrohr oder Unterrohr eines Fahrradrahmens aufgespannt. Sie entspricht mitunter auch der Haupterstreckungsebene des Fahrrades bzw. des Fahrradrahmens. Der seitliche Versatz des Gabelhalses und/oder des Hakenelements schafft einen weiteren Raum zur Anordnung eines ISCG, von Kettenblättern oder weiterer nötiger Bauteile.

Optional ist der Gabelhals in Bezug zur Längsachse As des Kettenstrebenprofils mit wenigstens einem seitlichen Versatz in Richtung der vom Hinterrad aufgespannten Hinterradebene bzw. der Haupterstreckungsebene des Fahrrades versehen. Hier gilt zuvor Genanntes.

Optional weist das Hakenende ein integral ausgebildetes Befestigungsmittel zur Befestigung eines Kabels oder dergleichen Steuerleitung des Fahrrads auf, optional eine Aussparung und/oder Durchführung. Gerade bei der Ausbildung des Hakenendes als eigenständiges und später erst mit dem Kettenstrebenprofil verbundenen Bauteils weist eine solche Ausführungsform entscheidende Vorteile auf. Optional ist wenigstens ein Befestigungsmittel am Gabelhals und/oder an wenigstens einem Hakenelement ausgebildet und weiter optional in einem in Richtung der Haupterstreckungsebene des Fahrrades nach innen versetzten Bereich angeordnet. Die Ausbildung des Befestigungsmittels garantiert u.a. die platzsparende Verlegung des Kabels oder dergleichen Steuerleitungen, sodass auch hier eine platzsparende Anordnung im Bereich des Tretlagergehäuses garantiert wird.

Wie erwähnt betrifft die Erfindung nicht nur einen Fahrradrahmen, sondern auch ein Fahrrad, umfassend einen solchen Fahrradrahmen und ein ISCG. Hier gilt zuvor und im Folgenden Genanntes identisch. Aus Redundanzgründen wird jedoch auf eine eigenständige Erwähnung verzichtet.

Weitere Ausführungsformen der Erfindung ergeben sich aus den Unteransprüchen. Im Folgenden wird die Erfindung anhand eines Ausführungsbeispiels beschrieben, das durch die beiliegenden Zeichnungen näher erläutert wird. Hierbei zeigen:
- Fig. 1: eine axonometrische Darstellung einer Ausführungsform des erfindungsgemäßen Fahrrads bzw. Fahrradrahmens;
- Fig. 2: eine Seitenansicht einer Ausführungsform eines erfindungsgemäßen Fahrradrahmens des Fahrrads gemäß Fig. 1;
- Fig. 3: eine Teildraufsicht auf den Fahrradrahmen gemäß Fig. 2;
- Fig. 4: eine axonometrische Teilansicht des Fahrradrahmens gemäß Fig. 2 im Tretlagerbereich;
- Fig. 5: die Ansicht gemäß Fig. 4 mit Achsen und Winkelmarkierungen; und
- Fig. 6: eine axonometrische Teilansicht einer Ausführungsform einer Kettenstrebe des Fahrradrahmens gemäß Fig. 2.

Im Folgenden werden für gleiche und gleich wirkende Bauteile dieselben Bezugsziffern verwendet, wobei zur Unterscheidung bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen eingeschränkt ist. Vielmehr sind diese Ausführungsformen hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung sich aus den Ansprüchen ergibt.

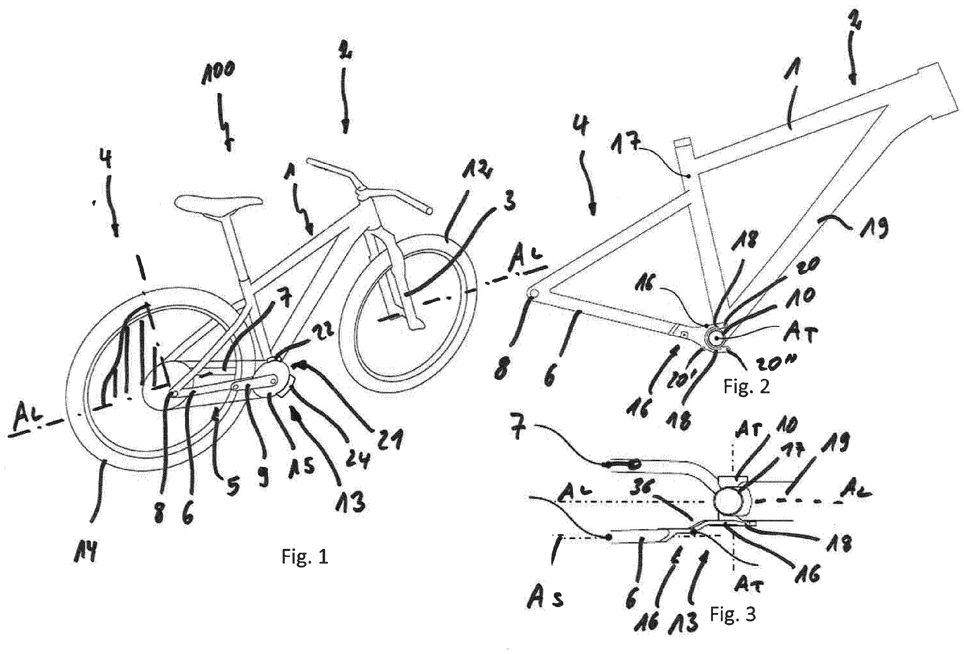

Fig. 1 zeigt ein Fahrrad 100, umfassend einen Fahrradrahmen 1. Der Fahrradrahmen 1 weist einen vorderen Rahmenteil 2 und einen hinteren Rahmenteil 4 auf, die jeweils zur Aufnahme eines Vorderrads 12 bzw. Hinterrads 14 ausgelegt sind. Zur Aufnahme des Vorderrads 12 ist bei dieser Ausführungsform eine Vorderradgabel 3 am vorderen Rahmenteil 2 angeordnet.

Um das Hinterrad 14 anzutreiben, ist eine Antriebsvorrichtung 5 vorgesehen und hier ein Kurbelantrieb, umfassend eine Kurbel 9, die in einem Tretlagergehäuse 10 (siehe u.a. Fig. 2 - 5) und einem Tretlager (nicht dargestellt) aufgenommen ist.

Der hintere Rahmenteil umfasst wenigstens eine Kettenstrebe 6, die ein hinteres Ausfallende 8 zur Aufnahme des Hinterrads mit dem Tretlagergehäuse 10 am vorderen Rahmenteil 2 verbindet. Diese Kettenstrebe 6 ist hier antriebsseitig und insbesondere auf der Rahmenseite auf der ein Kettenblatt 15 der Antriebsvorrichtung 5 vorgesehen ist angeordnet. Die Kettenstrebe 6 verläuft hier also in Richtung der Kettenblattseite 13 des Tretlagergehäuses 10. Eine weitere Kettenstrebe 7 ist auf der entgegengesetzten Seite vorgesehen, wobei auch diese ein Ausfallende mit dem Tretlagergehäuse 10 verbindet.

Wie insbesondere in Fig. 1 dargestellt, weist das Fahrrad 1 hier einen ISCG 21 auf, das beispielsweise eine Kettenführung 22 und einen Kettenblatt-Rammschutz 24 umfasst.

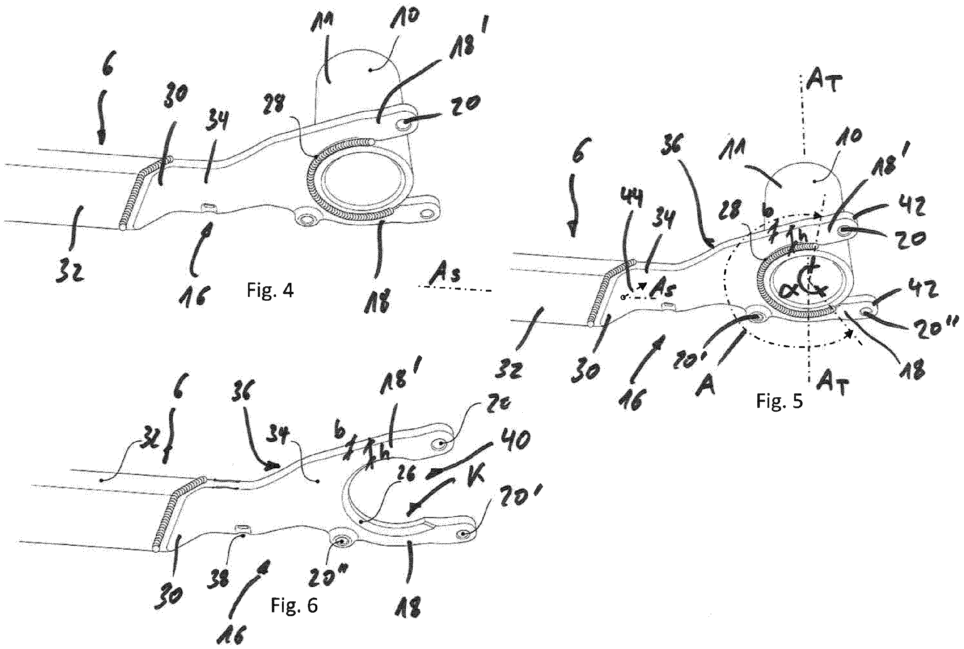

Wie in Fig. 2 und 3 dargestellt, sind am Tretlagergehäuse 10 neben den Kettenstreben 6 und 7 auch ein Sitzrohr 17 und ein Unterrohr 19 angeschlossen. Wie in den Figuren 2 bis 6 dargestellt, weist die Kettenstrebe 6 tretlagergehäuseseitig, also an dem Ende, das zum Tretlagergehäuse 10 weist, ein Hakenende 16 mit wenigstens einem Hakenelement 18 auf, das das Tretlagergehäuse 10 in einem Umfangsabschnitt A (siehe Fig. 5) umgreift.

Das Hakenende 16 ist optional als Gabel ausgebildet, wobei das Hakenelement 18 hier insbesondere durch zwei Gabelarme 18 gebildet wird.

An dem Hakenelement 18 sind optional Aufnahmemittel 20 vorgesehen, die zum Anschluss von ISCG-Bauteilen, und hier beispielsweise einer Kettenführung 22 oder einem Kettenblatt-Rammschutz 24 (siehe Fig. 1) dienen können. Insofern ist erfindungsgemäß also das Hakenelement Teil eines ISCG 21.

Wie insbesondere in den Figuren 4 und 5 dargestellt, kann das Hakenelement 18 im Umfassungsabschnitt A eine Innengeometrie aufweisen, die komplementär zur Außengeometrie des Tretlagergehäuses 10 ist. Bei dem hier gezeigten Ausführungsbeispiel ist beispielsweise das Tretlagergehäuse 10 als Rohr ausgebildet, wobei die von dem Hakenelement 18 gebildete Innengeometrie (siehe Fig. 6) einem Kreisbogen K entspricht, der komplementär zur Außengeometrie dieses Rohrs 10 ausgeführt ist. Bei dem hier dargestellten Ausführungsbeispiel kann so beispielsweise das Tretlagergehäuse 10 parallel zu seiner Tretlagerachse A_{T} (siehe Fig. 5) in die von dem Hakenelement 18 gebildete Aufnahme 40 (siehe Fig. 6) eingeschoben werden. Die Fixierung des Hakenelements 18 am Tretlagergehäuse 10 erfolgt erfindungsgemäβ stoffschlüssig, und zwar insbesondere mittels eines stoffschlüssigen Fügeverfahrens, wie beispielsweise eines Lötverfahrens oder eines Schweißverfahrens. Das Verfahren ist abhängig vom Material der zu fügenden Teile. Ein zuvor genanntes Fügeverfahren, nämlich Schweißen, ist insbesondere bei der Ausführung des Fahrradrahmens bzw. des Tretlagergehäuses und des Hakenendes aus Metall sinnvoll. Natürlich sind aber auch andere Fügeverfahren, beispielsweise Klebeverfahren, insbesondere bei der Ausführung des Rahmens oder der einzelnen Bauteile aus einem Kunststoff denkbar.

Zur Vereinfachung des Fügeverfahrens weist optional die Innengeometrie, gebildet von dem Hakenelement 18 eine Kehle 26 auf. Diese Kehle 26 ist optional auf einem dem Tretlagergehäuse 10 zugewandten Bereich des Hakenelements 18 vorgesehen. Eine solche Kehle 26 kann eine Fase, eine Abschrägung, eine Ausnehmung oder jede ähnliche Art von Freiraum sein, der der Aufnahme von Fügematerial dient. Die resultierende Fügenaht ist beispielsweise in den Figuren 4 und 5 mit dem Bezugszeichen 28 gekennzeichnet.

Wie erwähnt ist das Tretlagergehäuse 10 bei diesem Ausführungsbeispiel optional ein quer zur Fahrradlängsachse A_{L} (siehe Fig. 1) verlaufendes Rohr ausgebildet bzw. weist ein solches Rohr 11 auf, das zur Aufnahme eines Tretlagers ausgebildet ist. Das Hakenelement 18 umgreift bei dieser Ausführungsform das Rohr 11 in dem in Fig. 5 dargestellten Umfassungsabschnitt A.

Optional umschließt dieser Umfassungsabschnitt A 40 %, optional wenigstens 50 % und weiter optional wenigstens 55 % des Umfangs des Tretlagergehäuses 10. Der Umfassungsabschnitt A kann darüber hinaus so ausgeführt sein, dass er maximal 80 %, optional maximal 70 % und weiter optional maximal 60 % des Umfangs des Tretlagergehäuses 10 einschließt.

Bei diesem Ausführungsbeispiel ist optional im Umfassungsabschnitt A die Außengeometrie des Tretlagergehäuses 10 ringförmig bzw. kreisbogenförmig. "Ringförmig bzw. kreisbogenförmig", weil der mit dem Hakenelement in Verbindung stehende Bereich die Form eines Ringes aufweist. Je nach Breite des Hakenelements 18 und der Breite der Kontaktfläche zwischen Tretlagergehäuse 10 und Hakenelement 18 ist der Ring folglich weniger oder mehr dick. Die Innengeometrie des Hakenelements 18 ist zu diesem Ring optional komplementär kreisbogenförmig ausgebildet.

Wie in Fig. 6 dargestellt weist der Kreisbogen optional einen Mittelpunktswinkel α von wenigstens 145°, optional wenigstens 180°, weiter optional von wenigstens 200° auf. Auch ist es denkbar, einen maximalen Mittelpunktswinkel α von maximal 290°, optional maximal 250° und weiter optional von maximal 215° vorzusehen. Darüber hinaus ist es denkbar, das Hakenelement an seinen freien Enden 42 (siehe Fig. 6) miteinander zu verbinden, sodass sich eine (geschlossene) Ausnehmung bzw. ein Kreisring ergibt, die/der komplementär zur Außengeometrie des Tretlagergehäuses 10 ausgeführt ist. In diesem Fall wäre also der Mittelpunktswinkel α = 360°.

Insbesondere in Fig. 3 ist erkennbar, dass durch die erfindungsgemäße Ausbildung des Hakenendes 16 in Form des umgreifenden Hakenelements 18 eine sehr platzsparende Verbindung am Tretlagergehäuse 10 entsteht, die insbesondere der platzsparenden Aufnahme bzw. Ausbildung eines ISCG 21 ermöglicht.

Optional und wie insbesondere in den Figuren 3 bis 6 dargestellt, ist wenigstens ein Teil des Hakenelementes 18 in einer Richtung radial zu einer Tretlagerachse A_{T} des Tretlagers betrachtet dicker als in einer Richtung parallel zur Tretlagerachse A_{T}. Dieser Sachverhalt ist beispielsweise in Fig. 5 und 6 dargestellt, wobei hier die Stärke bzw. Höhe des Hakenelementes 18 in der Richtung radial zur Tretlagerachse A_{T} des Tretlagergehäuses mit dem Bezugszeichen h und die Stärke bzw. Breite des Hakenelementes in der Richtung parallel zur Tretlagerachse A_{T} mit dem Bezugszeichen b bezeichnet ist. Die Stärke des Bauteils in radialer Richtung bezieht sich hier auf den kleinsten Wert h, der sich bei Messung in radialer Richtung und insbesondere durch das Zentrum Z des Tretlagergehäuses 10 ergibt (siehe Fig. 5). Weiter optional ist wenigstens eine Teil des Hakenelementes in einer Richtung radial zur Tretlagerachse A_{T} und orthogonal zur Haupterstreckungsachse As der Kettenstrebe 6 (siehe Fig. 3 und 5) bzw. eines Kettenstrebenprofils betrachtet dicker als in einer Richtung parallel zu dieser Tretlagerachse. Optional ergibt sich insbesondere in diesem Zusammenhang ein Rechteckquerschnitt des Hakenelementes, mit einer größeren Höhe h als Breite b. Die Breite b verläuft hier optional in Richtung der Tretlagerachse A_{T}, die Höhe h orthogonal dazu.

Wie insbesondere in den Figuren 4 bis 6 dargestellt, ist optional das Hakenende 16 mit einem Anschlussprofil 30 stoffschlüssig mit einem Kettenstrebenprofil 32 der Kettenstrebe 6 verbunden und optional mit dem verschweißt oder verlötet. Das Anschlussprofil 30 ist hier optional als eine Abkantung ausgebildet, die mit einem Gabelhals 34 des Hakenendes 16 verbunden ist. Der Gabelhals 34 ist hier Teil des Hakenendes 16, und zwar der Teil, an dem das Hakenelement 18 anschließt.

Es ist denkbar, dass das Anschlussprofil 30 und/oder der Gabelhals 34 und/oder das Hakenelement 18 integral miteinander ausgebildet sind. Auch ist es denkbar, dass das Hakenende 16 aus einem Vollprofil gefräst oder dergleichen spanend bearbeitet, geschmiedet oder ein Gussteil ist.

Wie ebenfalls in den Figuren 3 bis 6 erkennbar, sind der Gabelhals 34 des Hakenendes 16 und/oder das Hakenelement 18 in Bezug zur Längsachse As des Kettenstrebenprofils 32 (siehe Fig. 3 und 5) seitlich in Richtung einer vom Hinterrad aufgespannten Hinterradebene E_{R} (siehe Fig. 1) versetzt am Kettenstrebenprofil 32 angeordnet. Diese Hinterradebene wird unter anderem auch durch die Längsachse A_{L} des Fahrrads und die Sitzstrebe 17 bzw. das Unterrohr 19 oder ein Oberrohr eines Fahrradrahmens aufgespannt. Sie entspricht mitunter auch der Haupterstreckungsebene des Fahrrades bzw. des Fahrradrahmens. Dieser Versatz ist durch den Pfeil 44 in Fig. 5 dargestellt. Die Fahrradlängsachse A_{L} ist in den Figuren 1 und 3 bezeichnet, die vom Hinterrad 14 aufgespannte Hinterradebene E_{R} ebenfalls.

Darüber hinaus ist es denkbar, dass der Gabelhals 34 in Bezug zur Längsachse As des Kettenstrebenprofils 32 wenigstens einen seitlichen Versatz 36 in Richtung der vom Hinterrad aufgespannten Hinterradebene E_{R} aufweist. Wie insbesondere in Fig. 6 dargestellt, ist optional am Hakenende 16 ein integral ausgebildetes Befestigungsmittel 38 zur Befestigung eines Kabels oder dergleichen Steuerleitung des Fahrrads ausgebildet. Dieses Befestigungsmittel kann beispielsweise eine Aussparung und/oder Durchführung sein.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein; mehrere "Mittel" können durch denselben Gegenstand bzw. unterschiedliche Gegenstände oder implementierte Struktur oder Funktion dargestellt werden; beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Ansprüchen aufgeführt werden, soll nicht angeben, dass eine Kombination dieser Maßnahmen nicht vorteilhafterweise eingesetzt werden kann. Insbesondere sollen alle funktionierenden Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

### Bezugszeichen

- 1: Fahrradrahmen
- 2: Vorderer Rahmenteil
- 3: Vordergabel
- 4: Hinterer Rahmenteil
- 5: Antriebsvorrichtung
- 6: Kettenstrebe
- 7: Kettenstrebe
- 8: Ausfallende
- 9: Kurbel
- 10: Tretlagergehäuse
- 11: Rohr
- 12: Vorderrad
- 13: Kettenblattseite
- 14: Hinterrad
- 15: Kettenblatt
- 16: Hakenende
- 17: Sitzrohr
- 18: Hakenelement
- 19: Unterrohr
- 20: Aufnahmemittel
- 21: ISCG
- 22: Kettenführung
- 24: Kettenblatt-Rammschutz
- 26: Kehle bzw. Ausnehmung
- 28: Fügematerial bzw. Schweißnaht
- 30: Anschlussprofil
- 32: Kettenstrebenprofil
- 34: Gabelhals
- 36: Versatz
- 38: Befestigungsmittel
- 40: Aufnahme
- 42: Freies Ende Hakenelement
- 44: Pfeil
- 100: Fahrrad
- E_{R}: Hinterradebene
- A_{L}: Fahrradlängsachse
- A_{T}: Tretlagerachse
- As: Längsachse bzw. Haupterstreckungsachse Kettenstrebenprofil
- A: Umfassungsabschnitt
- Z: Zentrum

## Patentansprüche

1. Fahrradrahmen, umfassend einen vorderen Rahmenteil (2) und einen hinteren Rahmenteil (4), jeweils ausgelegt zur Aufnahme eines Vorder- bzw. Hinterrades (12, 14), wobei der hintere Rahmenteil (4) wenigstens eine Kettenstrebe (6) umfasst, die ein hinteres Ausfallende (8), zur Aufnahme des Hinterrades (14), mit einem Tretlagergehäuse (10) am vorderen Rahmenteil (2) verbindet,
wobei der Fahrradrahmen (1) ein Starrrahmen ist, wobei die Kettenstrebe (6) tretlagergehäuseseitig ein Hakenende (16) mit wenigstens einem Hakenelement (18) aufweist, das das Tretlagergehäuse (10) in einem Umfassungsabschnitt (A) umgreift, wobei das Hakenelement (18) Teil eines ISCG (21) ist und wenigstens ein Aufnahmemittel (20) für eine Kettenführung (22) und/oder einen Kettenblatt-Rammschutz (24) aufweist, und wobei
das Hakenelement (18) stoffschlüssig mit dem Tretlagergehäuse (10) verbunden ist.

2. Fahrradrahmen nach Anspruch 1,
**dadurch gekennzeichnet, dass**
im Umfassungsabschnitt (A) das Hakenelement (18) eine Innengeometrie aufweist, die komplementäre zur Außengeometrie des Tretlagergehäuses (10) ist.

3. Fahrradrahmen nach einem der vorhergehenden Ansprüche,
**dadurch gekennzeichnet, dass**
das Hakenelement (18) mittels eines stoffschlüssigen Fügeverfahrens, optional mittels eines Lötverfahrens oder Schweißverfahrens verbunden ist.

4. Fahrradrahmen nach einem der vorhergehenden Ansprüche,
**dadurch gekennzeichnet, dass**
das Hakenelement (18) auf einem dem Tretlagergehäuse (10) zugewandten Bereich wenigstens eine Kehle (26) oder dergleichen Ausnehmung zur Aufnahme von Fügematerial (28) aufweist oder vor dem Verbinden aufgewiesen hat.

5. Fahrradrahmen nach einem der vorhergehenden Ansprüche,
**dadurch gekennzeichnet, dass**
das Tretlagergehäuse (10) ein quer zur Fahrradlängsachse (A_{L}) verlaufendes Rohr (11) aufweist, zur Aufnahme eines Tretlagers, wobei das Hakenelement (18) das Rohr (11) in dem Umfassungsabschnitt (A) umgreift.

6. Fahrradrahmen nach einem der vorhergehenden Ansprüche,
**dadurch gekennzeichnet, dass**
der Umfassungsabschnitt (A) wenigstens 40%, optional wenigstens 50%, weiter optional wenigstens 55% des Umfangs des Tretlagergehäuses (10) einschließt und/oder maximal 80%, optional maximal 70% und weiter optional maximal 60% des Umfangs des Tretlagergehäuses (10) einschließt.

7. Fahrradrahmen nach einem der vorhergehenden Ansprüche,
**dadurch gekennzeichnet, dass**
im Umfassungsabschnitt (A) die Außengeometrie des Tretlagergehäuses (10) ringförmig und die Innengeometrie des Hakenelements (18) dazu komplementär kreisbogenförmig ausgebildet ist, optional mit einem Mittelpunktswinkel α von wenigstens 145°, optional wenigstens 180°, weiter optional wenigstens 200° und/oder mit einem Mittelpunktswinkel von maximal 290°, optional maximal 250° und weiter optional maximal 215°.

8. Fahrradrahmen nach einem der vorhergehenden Ansprüche,
**dadurch gekennzeichnet, dass** wenigstens ein Teil des Hakenelements (18) in einer Richtung radial zu einer Tretlagerachse (A_{T}) des Tretlagers betrachtet dicker ist als in einer Richtung parallel zur Tretlagerachse (A_{T}).

9. Fahrradrahmen nach einem der vorhergehenden Ansprüche,
**dadurch gekennzeichnet, dass**
das Hakenende (16) mit einem Anschlussprofil (30) stoffschlüssig mit einem Kettenstrebenprofil (32) der Kettenstrebe (6) verbunden, optional mit diesem verschweißt oder verlötet ist.

10. Fahrradrahmen nach einem der vorhergehenden Ansprüche,
**dadurch gekennzeichnet, dass**
ein Gabelhals (34) des Hakenendes (16), an den das Hakenelement (18) anschließt, und/oder das Hakenelement (18) in Bezug zur Längsachse (A_{S}) des Kettenstrebenprofils (32) seitlich in Richtung einer vom Hinterrad aufgespannten Hinterradebene (E_{R}) versetzt am Kettenstrebenprofil (32) angeordnet sind.

11. Fahrradrahmen nach einem der vorhergehenden Ansprüche,
**dadurch gekennzeichnet, dass**
der Gabelhals (34) in Bezug zur Längsachse (A_{S}) des Kettenstrebenprofils (32) wenigstens einen seitlichen Versatz (36) in Richtung der vom Hinterrad aufgespannten Hinterradebene (E_{R}) aufweist.

12. Fahrradrahmen nach einem der vorhergehenden Ansprüche,
**dadurch gekennzeichnet, dass**
der Fahrradrahmen (1) wenigstens teilweise ein Metallrahmen ist.

13. Fahrrad umfassend einen Fahrradrahmen (1) nach einem der vorhergehenden Ansprüche und einen ISCG (21).

## Claims

1. Bicycle frame, comprising a front frame part (2) and a rear frame part (4), each designed to accommodate a front or rear wheel (12, 14), wherein the rear frame part (4) comprises at least one chainstay (6) which connects a rear dropout (8), for receiving the rear wheel (14), to a bottom bracket housing (10) on the front frame part (2),
wherein the bicycle frame (1) is a rigid frame,
**characterised in that**
the chainstay (6) on the bottom bracket housing side has a hook end (16) with at least one hook element (18) which engages around the bottom bracket housing (10) in an enclosing portion (A), wherein the hook element (18) is part of an ISCG, International Standard Chain Guide, (21) and has at least one receiving means (20) for a chain guide (22) and/or a chainring ram protection (24), and wherein the hook element (18) is integrally bonded to the bottom bracket housing (10).

2. Bicycle frame according to claim 1,
**characterised in that**
in the enclosing portion (A), the hook element (18) has an internal geometry that is complementary to the external geometry of the bottom bracket housing (10).

3. Bicycle frame according to any one of the preceding claims,
**characterised in that**
the hook element (18) is connected by means of an integrally bonded joining process, optionally by means of a soldering process or welding process.

4. Bicycle frame according to any one of the preceding claims,
**characterised in that**
the hook element (18) has at least one groove (26) or a similar recess for receiving joining material (28) on a region facing the bottom bracket housing (10), or has had such before the connection.

5. Bicycle frame according to any one of the preceding claims,
**characterised in that**
the bottom bracket housing (10) has a tube (11) running transversely to the bicycle longitudinal axis (A_{L}) for receiving a bottom bracket, wherein the hook element (18) engages around the tube (11) in the enclosing portion (A).

6. Bicycle frame according to any one of the preceding claims,
**characterised in that**
the enclosing portion (A) encloses at least 40%, optionally at least 50%, further optionally at least 55% of the circumference of the bottom bracket housing (10) and/or a maximum of 80%, optionally a maximum of 70% and further optionally a maximum of 60% of the circumference of the bottom bracket housing (10).

7. Bicycle frame according to any one of the preceding claims,
**characterised in that**
in the enclosing portion (A) the external geometry of the bottom bracket housing (10) is ring-shaped and the internal geometry of the hook element (18) is designed in a complementary circular arc shape, optionally with a central angle α of at least 145°, optionally at least 180°, further optionally at least 200° and/or with a centre-point angle of a maximum of 290°, optionally a maximum of 250° and further optionally a maximum of 215°.

8. Bicycle frame according to any one of the preceding claims,
**characterised in that**
at least part of the hook element (18) is thicker in a direction radial to a bottom bracket axis (A_{T}) of the bottom bracket than in a direction parallel to the bottom bracket axis (A_{T}).

9. Bicycle frame according to any one of the preceding claims,
**characterised in that**
the hook end (16) with a connection profile (30) is integrally bonded to a chainstay profile (32) of the chainstay (6), optionally welded or soldered to this.

10. Bicycle frame according to any one of the preceding claims,
**characterised in that**
a fork neck (34) of the hook end (16), to which the hook element (18) connects, and/or the hook element (18) are arranged on the chainstay profile (32) offset in relation to the longitudinal axis (A_{S}) of the chainstay profile (32) and laterally in the direction of a rear wheel plane (E_{R}) spanned by the rear wheel.

11. Bicycle frame according to any one of the preceding claims,
**characterised in that**
the fork neck (34) has at least one lateral offset (36) in relation to the longitudinal axis (A_{S}) of the chainstay profile (32) in the direction of the rear wheel plane (E_{R}) spanned by the rear wheel.

12. Bicycle frame according to any one of the preceding claims,
**characterised in that**
the bicycle frame (1) is at least partially a metal frame.

13. Bicycle comprising a bicycle frame (1) according to any one of the preceding claims and an ISCG (21).

## Revendications

1. Cadre de bicyclette selon, comprenant une partie de cadre avant (2) et une partie de cadre arrière (4), respectivement conçues pour recevoir une roue avant ou arrière (12, 14), dans lequel la partie de cadre arrière (4) comprend au moins un plateau (6) qui relie une patte d'extrémité arrière (8), destinée à recevoir la roue arrière (14), à un carter de pédalier (10) sur la partie de cadre avant (2),
dans lequel le cadre de bicyclette (1) est un cadre rigide,
**caractérisé en ce que**
le plateau (6) présente côté carter de pédalier une extrémité à crochet (16) avec au moins un élément crochet (18) qui entoure le carter de pédalier (10) dans une partie d'enserrement (A), dans lequel l'élément crochet (18) fait partie d'un ISCG, International Standard Chain Guide, (21) et présente au moins un moyen de réception (20) pour un guide-chaîne (22) et/ou un protège-plateau (24), et dans lequel
l'élément crochet (18) est relié par liaison de matière au carter de pédalier (10).

2. Cadre de bicyclette selon de revendication 1,
**caractérisé en ce que**
dans la partie d'enserrement (A), l'élément crochet (18) présente une géométrie intérieure qui est complémentaire de la géométrie extérieure du carter de pédalier (10).

3. Cadre de bicyclette selon l'une quelconque des revendications précédentes,
**caractérisé en ce que**
l'élément crochet (18) est relié au moyen d'un procédé d'assemblage par liaison de matière, éventuellement au moyen d'un procédé de brasage ou procédé de soudage.

4. Cadre de bicyclette selon l'une quelconque des revendications précédentes,
**caractérisé en ce que**
l'élément crochet (18) présente ou a présenté avant la liaison, sur une zone tournée vers le carter de pédalier (10), au moins une gorge (26) ou un évidement similaire pour la réception de matériau d'assemblage (28).

5. Cadre de bicyclette selon l'une quelconque des revendications précédentes,
**caractérisé en ce que**
le carter de pédalier (10) présente un tube (11) s'étendant transversalement à l'axe longitudinal de bicyclette (A_{L}), destiné à recevoir un palier, dans lequel l'élément crochet (18) entoure le tube (11) dans la partie d'enserrement (A).

6. Cadre de bicyclette selon l'une quelconque des revendications précédentes,
**caractérisé en ce que**
la partie d'enserrement (A) enferme au moins 40 %, éventuellement au moins 50 %, plus éventuellement au moins 55 % de la circonférence du carter de pédalier (10) et/ou enferme au maximum 80 %, éventuellement au maximum 70 % et plus éventuellement au maximum 60 % de la circonférence du carter de pédalier (10).

7. Cadre de bicyclette selon l'une quelconque des revendications précédentes,
**caractérisé en ce que**
dans la partie d'enserrement (A), la géométrie extérieure du carter de pédalier (10) est réalisée de manière annulaire et la géométrie intérieure de l'élément crochet (18) en forme d'arc de cercle de manière complémentaire à celle-ci, éventuellement avec un angle α au centre d'au moins 145°, éventuellement d'au moins 180°, plus éventuellement d'au moins 200° et/ou avec un angle au centre de maximum 290°, éventuellement au maximum de 250° et plus éventuellement au maximum de 215°.

8. Cadre de bicyclette selon l'une quelconque des revendications précédentes,
**caractérisé en ce que**
au moins une partie de l'élément crochet (18) est plus épaisse, vue dans une direction radiale par rapport à un axe de palier (A_{T}) du palier, que dans une direction parallèle à l'axe de palier (A_{T}).

9. Cadre de bicyclette selon l'une quelconque des revendications précédentes,
**caractérisé en ce que**
l'extrémité à crochet (16) avec un profilé de raccordement (30) est reliée par liaison de matière à un profilé de plateau (32) du plateau (6), éventuellement soudée ou brasée à celui-ci.

10. Cadre de bicyclette selon l'une quelconque des revendications précédentes,
**caractérisé en ce que**
un col de fourche (34) de l'extrémité à crochet (16), auquel l'élément crochet (18) se raccorde, et/ou l'élément crochet (18) sont disposés sur le profilé de plateau (32) de manière décalée latéralement en direction d'un plan de roue arrière (E_{R}) sous-tendu par la roue arrière par rapport à l'axe longitudinal (A_{S}) du profilé de plateau (32).

11. Cadre de bicyclette selon l'une quelconque des revendications précédentes,
**caractérisé en ce que**
le col de fourche (34) présente au moins un décalage latéral (36) en direction du plan de roue arrière (E_{R}) sous-tendu par la roue arrière par rapport à l'axe longitudinal (A_{S}) du profilé de plateau (32).

12. Cadre de bicyclette selon l'une quelconque des revendications précédentes,
**caractérisé en ce que**
le cadre de bicyclette (1) est au moins en partie un cadre métallique.

13. Bicyclette comprenant un cadre de bicyclette (1) selon l'une quelconque des revendications précédentes et un ISCG (21).
